# EUROPEAN PATENT APPLICATION

(11) **EP 4 814 453 A1**
(43) Date of publication of application: **30.09.2026**
(21) Application number: 26165227.5
(22) Date of filing: 16.03.2026
(51) Int. Cl.: G01J 5/00, G01J 5/02, G01J 5/04, G01J 5/06, G01J 5/061

(54) **INFRARED EAR TEMPERATURE MEASURING DEVICE**

(30) Priority: 20.03.2025 TW 114110581
(71) Applicant: Microlife Corporation, Taipei City 114 (TW)
(72) Inventor: LIN, CHIA-MING, TAIPEI (TW); CHIEN, CHIH-CHERNG, TAIPEI (TW)
(74) Representative: Gill Jennings & Every LLP

(57) **Abstract**

An infrared ear temperature measuring device (1) includes a handle body (10), a measuring probe (11), an infrared sensing assembly (12) including a heating element (121), a temperature-sensing element (122), a thermopile element (123), and a processor (13). The temperature-sensing element (122) detects a temperature of the measuring probe (11) to obtain an initial temperature measurement value and monitored temperature measurement values, the heating element (121) heats the measuring probe (11), and the thermopile element (123) detects a human body temperature; and the processor (13) has a control unit (131) electrically connected to the infrared sensing assembly (12). When the initial temperature measurement value is less than or equal to X, the control unit (131) drives the heating element (121) using two heating pulse-width modulation (PWM) signals having different duty cycles, and dynamically controls the heating element (121) based on the monitored temperature measurement values.

## Description

### CROSS-REFERENCE TO RELATED APPLICATION

This application claims priority to Taiwan Patent Application No. 114110581 filed on March 20, 2025, which is hereby incorporated herein by reference in its entirety.

### BACKGROUND OF THE INVENTION

### 1. Field of the Invention

This disclosure relates to the technical field of body temperature measurement products, and more particularly to an infrared ear thermometer capable of preheating a probe and provided with a heating protection mechanism, thereby improving the accuracy of body temperature measurement and ensuring user safety.

### 2. Description of Related Art

An infrared ear thermometer is a body temperature measurement device that measures the temperature inside the ear canal using infrared technology. It estimates a person's core body temperature by sensing the infrared radiation emitted from the eardrum and surrounding tissues. Because the temperature of the eardrum within the ear canal is closer to core body temperature and is readily detectable, infrared ear thermometers are currently widely used in medical and home healthcare applications. However, in order to ensure measurement accuracy, the temperature state of the probe at the time of measurement needs to be sufficiently controlled.

During body temperature measurement, the temperature state of the probe of an infrared ear thermometer has a significant effect on measurement accuracy. For example, if the measuring probe temperature is too low, it may absorb part of the thermal energy from the ear canal upon contact, causing localized cooling and resulting in a temperature reading lower than the actual body temperature. Conversely, if the measuring probe temperature is too high, it may generate a thermal effect in the ear canal, leading to a temperature reading that is higher than the actual body temperature. Therefore, maintaining the probe at an appropriate temperature can help reduce thermal shock to the ear canal while minimizing the cooling effect of the probe on the ear canal, thereby improving the stability and accuracy of temperature measurements.

In view of the foregoing, the present invention has been conceived and proposed to provide an infrared ear thermometer that mitigates the influence of probe temperature on the accuracy of body temperature measurement, while also providing enhanced user safety.

### SUMMARY OF THE INVENTION

One aspect of the present disclosure is to provide an infrared ear temperature measuring device that employs a built-in heating mechanism so that the measuring probe can be placed in a suitable temperature operating state, thereby reducing cooling effects of the measuring probe on the ear canal or thermal shock, and improving the accuracy of measurement results. At the same time, protection mechanisms are provided to prevent injury to the user due to abnormal heating, ensuring user safety and comfort and optimizing the user experience.

To achieve the above aspect, the present disclosure provides an infrared ear temperature measuring device, comprising: a handle body; a measuring probe connected to one end of the handle body; an infrared sensing assembly disposed within the measuring probe, the infrared sensing assembly comprising a heating element, a temperature-sensing element, and a thermopile element, wherein the temperature-sensing element is configured to detect a temperature of the measuring probe and to obtain an initial temperature measurement value and a plurality of monitored temperature measurement values; wherein the heating element is configured to heat the measuring probe, and wherein the thermopile element is configured to detect a human body temperature after the measuring probe is placed in an ear canal; a processor disposed in the handle body or the measuring probe, the processor comprising a control unit and electrically connected to the infrared sensing assembly; and an indicator unit disposed within the handle body, wherein, when the initial temperature measurement value is less than or equal to X, the control unit drives the heating element, and during a heating process, the control unit drives the heating element using at least two heating pulse-width modulation (PWM) signals having different duty cycles, and dynamically controls an operating state of the heating element based on the monitored temperature measurement values; and wherein, when any one of the monitored temperature measurement values is greater than A, the control unit stops driving the heating element, and wherein X is less than A; wherein when a duty cycle of any of the heating PWM signals is greater than a maximum preset value or less than a minimum preset value, the control unit stops driving the heating element, and the indicator unit outputs a heating abnormality warning.

**In** another aspect of the present disclosure, the initial temperature measurement value is less than B or greater than A, the indicator unit outputs a low-temperature warning or a high-temperature warning, wherein X is greater than B. **In** another aspect of the present disclosure, A is 40 °C, B is 10°C, and X is 35 °C, 36 °C, 37 °C, or 38 °C.

**In** another aspect of the present disclosure, after the control unit drives the heating element for longer than a preset time period, the control unit stops driving the heating element, and the indicator unit outputs the heating abnormality warning, wherein the preset time period is from 15 seconds to 25 seconds.

In another aspect of the present disclosure, the control unit sets an upper driving time limit for each of the heating PWM signals, and when the heating element is driven according to any one of the heating PWM signals for longer than the corresponding upper driving time limit, the control unit stops driving the heating element or switches to driving the heating element using another one of the heating PWM signals.

In another aspect of the present disclosure, the control unit inputting the heating PWM signals to the power control circuit, the power control circuit outputting a plurality of driving PWM signals in response to the heating PWM signals to drive the heating element; wherein the processor further comprises a feedback comparison unit electrically connected to the control unit and the power control circuit, the feedback comparison unit being configured to compare the driving PWM signals with the heating PWM signals, and when a difference in frequency or duty cycle exists between the driving PWM signals and the heating PWM signals, the control unit stops driving the heating element and the indicator unit outputs the heating abnormality warning.

In another aspect of the present disclosure, when an absolute difference in frequency or an absolute difference in duty cycle between the driving PWM signals and the heating PWM signals is from 3% to 5%, the control unit stops driving the heating element.

In another aspect of the present disclosure, the temperature-sensing element is electrically connected to a voltage comparator disposed in the handle body or the measuring probe, so as to input a temperature voltage value to the voltage comparator, the voltage comparator further receiving a fixed voltage value, the voltage comparator being electrically connected to a power switch circuit indirectly electrically connected to the heating element; wherein the voltage comparator compares the temperature voltage value with the fixed voltage value, and when the temperature voltage value is lower than the fixed voltage value, the voltage comparator controls the power switch circuit to stop supplying power to the heating element.

In another aspect of the present disclosure, the measuring probe comprises a heating indicator light, and the processor comprises a lighting driving unit electrically connected to the heating indicator light and the control unit, the lighting driving unit being configured to output a plurality of light modulation signals corresponding to the driving PWM signals to the heating indicator light, such that the heating indicator light illuminates all or part of the measuring probe.

In another aspect of the present disclosure, the handle body comprises a ring-shaped indicator light disposed at a junction between the handle body and the measuring probe, the processor comprises a lighting driving unit, and the ring-shaped indicator light is electrically connected to the lighting driving unit, the ring-shaped indicator light being configured to generate corresponding illumination states based on the initial temperature measurement value and the monitored temperature measurement values.

In another aspect of the present disclosure, the ring-shaped indicator light comprises a single-color LED (Light Emitting Diode) or a three-color LED, and generates illumination states with color variation or brightness gradation based on the initial temperature measurement value and the monitored temperature measurement values.

In summary, the infrared ear temperature measuring device adopts a technical solution that performs heating using multi-segment driving signals with different duty cycles and simultaneously detects the temperature state of the measuring probe in real time. This yields advantages of rapid temperature rise and stable heating. In addition, heating detection and warning protection mechanisms are provided such that heating can be stopped in real time when an abnormality occurs to prevent the measuring probe from overheating or from failing to reach a suitable operating state despite prolonged waiting, thereby ensuring user safety and comfort. The present disclosure also proposes a number of additional technical features to enhance the functionality of the infrared ear temperature measuring device, as set forth in the foregoing paragraphs.

### BRIEF DESCRIPTION OF THE DRAWINGS

In order to sufficiently understand the essence, advantages and the preferred embodiments of the present invention, the following detailed description will be more clearly understood by referring to the accompanying drawings.
FIG. 1 is a structural schematic diagram of an infrared ear temperature measuring device according to a preferred embodiment of the present disclosure.
FIG. 2 is a block diagram of an infrared ear temperature measuring device according to a preferred embodiment of the present disclosure.
FIG. 3 is a block diagram of another example of an infrared ear temperature measuring device according to a preferred embodiment of the present disclosure.
FIG. 4 is a schematic diagram of heating PWM signals and driving PWM signals according to another example of a preferred embodiment of the present disclosure.
FIG. 5 is a block diagram of still another example of an infrared ear temperature measuring device according to a preferred embodiment of the present disclosure.

### DETAILED DESCRIPTION OF THE INVENTION

The following description shows the preferred embodiments of the present invention. The present invention is described below by referring to the embodiments and the figures. Thus, the present invention is not intended to be limited to the embodiments shown but is to be accorded the principles disclosed herein. Furthermore, various modifications or changes in light thereof will be suggested to a person skilled in the art and are to be included within the spirit and purview of this application and scope of the appended claims.

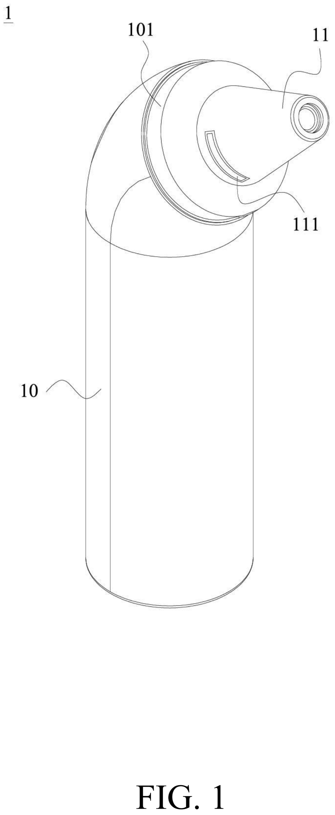

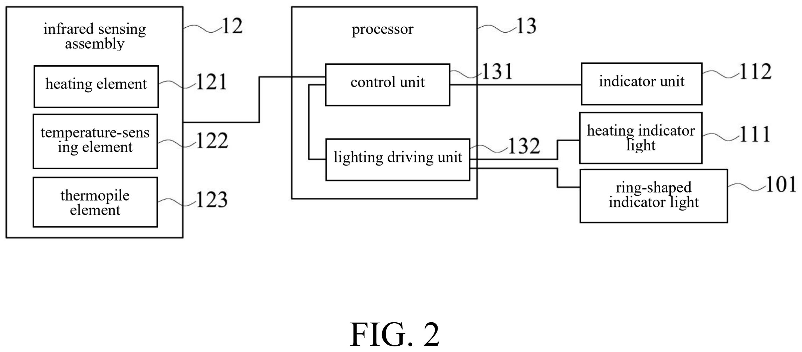

Please refer to FIGS. 1 and 2, which are a structural schematic diagram and a block diagram, respectively, of an infrared ear temperature measuring device according to a preferred embodiment of the present disclosure. The present embodiment discloses an infrared ear temperature measuring device 1, comprising a handle body 10, a measuring probe 11, an infrared sensing assembly 12, and a processor 13. The measuring probe 11 is made of PCTG or ABS.

The measuring probe 11 is connected to one end of the handle body 10. The handle body 10 is grasped by a user to place the measuring probe 11 into an ear canal for body temperature measurement. Various components, such as a power switch, a display screen, and a battery, may be disposed on the handle body 10, and the structure may be compliant with waterproofing regulations. However, these are not the technical focus of the present disclosure and thus are not further described herein. The infrared sensing assembly 12 is disposed within the measuring probe 11 and collects external infrared energy through a window (not shown). The infrared sensing assembly 12 comprises a heating element 121, a temperature-sensing element 122, and a thermopile element 123. The temperature-sensing element 122 detects the temperature of the measuring probe 11 and obtains an initial temperature measurement value and a plurality of monitored temperature measurement values. Preferably, the temperature-sensing element 122 may be a thermistor. The initial temperature measurement value refers to the first temperature measured by the temperature-sensing element 122 after the infrared ear temperature measuring device 1 is powered on and started, and subsequent temperature measurement values after the first are defined as the monitored temperature measurement values. The heating element 121 heats the measuring probe 11 and preferably may be a heating resistor, although the invention is not limited thereto. The thermopile element 123 detects a human body temperature after the measuring probe 11 is placed in the ear canal. Specifically, the thermopile element 123 detects infrared radiation in the ear canal and converts it into a voltage signal, which, after computational processing, yields a body temperature value. However, how to compute the body temperature value is known in the art and is not the core of the disclosure, so it is not further described.

The processor 13 is disposed within the handle body 10 or the measuring probe 11 and is electrically connected to the infrared sensing assembly 12. The processor 13 includes a control unit 131 and is electrically connected to an indicator unit 112. When the initial temperature measurement value is less than or equal to X, the control unit 131 drives the heating element 121. During heating, the control unit 131 drives the heating element 121 at different times with at least two heating PWM signals, the heating PWM signals having different duty cycles. It will be appreciated by those skilled in the art that a PWM generator of the processor can be used to generate heating PWM signals to drive the heating element. The control unit 131 dynamically controls the operating state of the heating element 121 based on the monitored temperature measurement values; that is, the control unit 131 adjusts the duty cycle of the heating PWM signals based on the magnitude of the monitored temperature measurement values, thereby controlling the rate of change of the heating temperature. When any one of the monitored temperature measurement values is greater than A, the control unit 131 stops driving the heating element 121, and the indicator unit 112 outputs a heating abnormality warning, wherein X is less than A. When the duty cycle of any one of the heating PWM signals is greater than a maximum preset value or less than a minimum preset value, the control unit 131 stops driving the heating element 121, and the indicator unit 112 outputs the heating abnormality warning. In this embodiment, the maximum preset value may preferably be 75% or 60%, and the minimum preset value may be 1% or 5%, without limitation.

Accordingly, in addition to continuously and stably heating the measuring probe 11 by having the control unit 131 adjust the duty cycle of the heating PWM signals based on the monitored temperature measurement values, the infrared ear temperature measuring device 1 can also avoid the measuring probe 11 being at an unsuitable temperature that causes a cooling effect on the ear canal or the ear canal causing thermal shock to the measuring probe 11, thereby obtaining more accurate measurement results. Furthermore, protection mechanisms are designed from the dual perspectives of temperature control and output control to avoid heating drive abnormalities that lead to component damage or device failure, or the measuring probe 11 being heated by the heating element 121 to an excessively high temperature that could scald the user. Specifically, during operation of the heating element 121, the temperature-sensing element 122 continuously monitors the temperature of the measuring probe 11. When it is found that the temperature of the measuring probe 11 is greater than A, indicating excessive heating that may scald a user during ear-temperature measurement, the control unit 131 stops driving the heating element 121, and the indicator unit 112 outputs the heating abnormality warning to alert the user. Another mechanism is that when the duty cycle of any one of the heating PWM signals does not conform to a preset value, abnormal heating operation is stopped in real time to protect the overall probe.

Further, the infrared ear temperature measuring device 1 may also provide a function of monitoring and warning of the measuring probe 11 temperature after startup, to avoid a user measuring body temperature in an unsuitable measurement state. Specifically, when the initial temperature measurement value is less than B or greater than A, the indicator unit 112 outputs a low-temperature warning or a high-temperature warning. In this way, the user is prompted that the infrared ear temperature measuring device 1 is currently in a state not recommended for measurement, thereby avoiding erroneous readings. In this embodiment, with respect to the temperature values A, B, and X, X is greater than B and less than A; for example, without limitation, A may be 40 °C, B may be 10 °C, and X may be 35 °C, 36 °C, 37 °C, or 38 °C; preferably, X may be 36 °C or 37 °C.

Next, the infrared ear temperature measuring device 1 may further include other protection mechanism features. In one embodiment, a maximum time during which the heating element 121 is driven by the control unit 131 may be set. Specifically, when the control unit 131 drives the heating element 121 to operate for longer than a preset time period, it stops driving the heating element 121, and the indicator unit 112 outputs the heating abnormality warning, such as a flashing light warning or a vibration warning. In other embodiments, the measuring probe 11 may be a light-transmissive probe, so that a flashing light indication can be emitted outward through the light-transmissive probe. Thus, the driven-time condition of the heating element 121 can be used to prevent abnormal operation of the heating element 121, effectively preventing overheating and a poor user experience. Preferably, the preset time period may be, for example, 20 seconds, without limitation. It will be appreciated by those skilled in the art that a preset time period of 15-25 seconds is an acceptable heating duration.

Additionally, apart from using the total driven time of the heating element 121 as a protection condition, the driven time of each heating PWM signal may also be set individually. Specifically, in another embodiment, the control unit 131 sets, for each heating PWM signal, a corresponding driving time (upper limit setting). When the heating element 121 operates according to any one of the heating PWM signals for longer than its corresponding driving time, the control unit 131 stops driving the heating element 121; or switches to driving the heating element 121 with another heating PWM signal. This embodiment discloses a technical feature of setting an upper limit for the driving time of each heating PWM signal, thereby protecting components, dynamically adjusting the heating state, and stopping heating in real time in the event of abnormal heating.

Considering that, during heating of the infrared ear temperature measuring device 1, if there is no more intuitive indication, a user may be unable to ascertain the current state of the infrared ear temperature measuring device 1, it is preferable that the measuring probe 11 comprises a heating indicator light 111. The processor 13 includes a lighting driving unit 132 electrically connected to the heating indicator light 111 and the control unit 131. Based on the driving PWM signals, the lighting driving unit 132 outputs corresponding light modulation signals to the heating indicator light 111, such that the heating indicator light 111 illuminates all or part of the measuring probe 11. Thus, during heating, a user can quickly understand the current heating state of the infrared ear temperature measuring device 1, thereby providing a reminder effect. Preferably, the heating indicator light 111, in response to the intensity of the light modulation signals, presents different brightness levels; for example, the higher the duty cycle of the light modulation signals, the brighter the heating indicator light 111, and vice versa, which helps a user observe changes in heating intensity. The heating indicator light 111 may be embedded in the structure of the measuring probe 11 and exposed for direct viewing by the user, or the measuring probe 11 may be formed of a light-guiding material with the heating indicator light 111 disposed inside the measuring probe 11 so that the whole or part of the measuring probe 11 emits light by light-guiding principles.

In addition, the handle body 10 may comprise a ring-shaped indicator light 101 disposed at a junction where the handle body 10 and the measuring probe 11 are coupled, without limitation. The ring-shaped indicator light 101 is electrically connected to the lighting driving unit 132 so as to generate corresponding illumination states based on the initial temperature measurement value and the monitored temperature measurement values measured by the temperature-sensing element 122. Through the ring-shaped indicator light 101, a user can quickly know the temperature changes of the measuring probe 11 before and after heating from the illumination state. The ring-shaped indicator light 101 may comprise a single-color LED or a three-color LED and generate illumination states with color variation or brightness gradation based on the initial temperature measurement value and the monitored temperature measurement values. This technical feature provides more intuitive and diversified visual prompts, and the ring-shaped indicator light 101 may be configured in color-gradation or brightness-gradation modes as required, improving market adaptability and optimizing user experience. Notably, forming the ring-shaped indicator light 101 in an annular structure and disposing it at the junction of the handle body 10 and the measuring probe 11 affords advantages such as high visual recognizability, uniform light distribution, and high structural integration. With this structural feature, the ring-shaped indicator light 101 can be more easily observed by a user to clearly provide real-time feedback; the annular design provides 360-degree illumination display, ensuring that a user can clearly recognize state changes from different angles; and the arrangement helps simplify the overall structure, avoiding the addition of extra components in the gripping area that would affect handling, while allowing the indication function to be naturally integrated into the overall structural design. In practical design, when heating is completed (i.e., when a protection mechanism controls the stopping of power supply to the heating element), the heating indicator light 111 and/or the ring-shaped indicator light 101 may turn off or flash to prompt the user to begin the body-temperature measurement procedure.

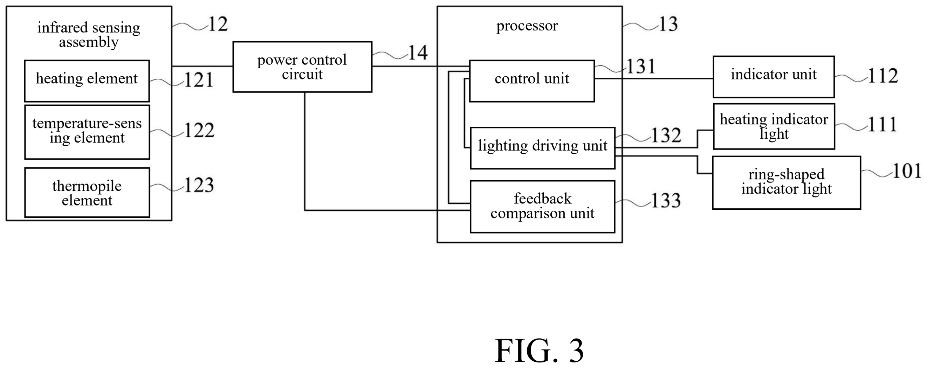

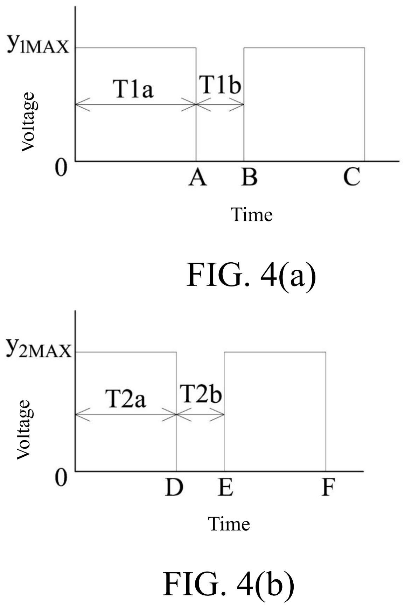

Please refer to FIGS. 3 and 4, which are a block diagram of another embodiment of the infrared ear temperature measuring device and a schematic diagram of heating PWM signals and driving PWM signals, respectively, according to a preferred embodiment. In this embodiment, another protection mechanism is disclosed. The control unit 131 is electrically connected to the infrared sensing assembly 12 through a power control circuit 14. The control unit 131 inputs the heating PWM signals to the power control circuit 14, and the power control circuit 14 outputs a plurality of driving PWM signals based on the heating PWM signals to drive the heating element 121. The processor 13 further comprises a feedback comparison unit 133 electrically connected to the control unit 131 and the power control circuit 14. The feedback comparison unit 133 compares the driving PWM signals with the heating PWM signals. When a difference in frequency or duty cycle between the driving PWM signals and the heating PWM signals is detected, the control unit 131 stops driving the heating element 121, and the indicator unit 112 outputs the heating abnormality warning. In short, the protection mechanism compares the ideal PWM signals (i.e., the heating PWM signals) with the feedback actual PWM signals (i.e., the driving PWM signals) and confirms the actual drive state of the heating element 121 based on differences in frequency or duty cycle between the two signals, thereby effectively monitoring and preventing abnormal operation. Further, when an absolute difference in frequency or an absolute difference in duty cycle between the driving PWM signals and the heating PWM signals is 3-5%, the control unit 131 stops driving the heating element 121. More specifically, referring to FIGS. 4(a) and 4(b), assuming an ON-time length of the driving PWM signals is T1a and an OFF-time length is T1b, and an ON-time length of the heating PWM signals is T2a and an OFF-time length is T2b, then the above absolute frequency difference is defined as $\left|\frac{T 1 a - T 2 a}{T 1 a}\right|$, and the absolute duty-cycle difference is defined as $\left|\frac{\left(T1a+T1b\right) - \left(T2a+T2b\right)}{T 1 a + T 1 b}\right|$.

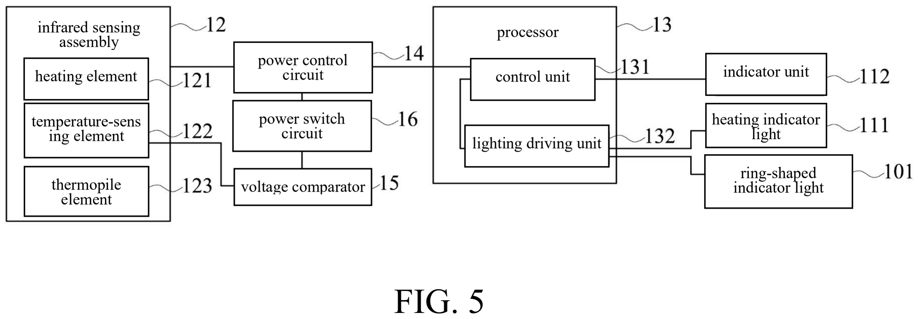

Please refer to FIG. 5, which is a block diagram of still another embodiment of the infrared ear temperature measuring device according to a preferred embodiment. In this embodiment, yet another protection mechanism is proposed. The temperature-sensing element 122 is further electrically connected to a voltage comparator 15 disposed in the handle body 10 or the measuring probe 11 to input a temperature voltage value to the voltage comparator 15. The voltage comparator 15 further receives a fixed voltage value (for example, 1.2 V supplied by a system power source) and is electrically connected to a power switch circuit 16 that is electrically connected to the heating element 121. For example, the power switch circuit 16 may be indirectly electrically connected to the infrared sensing assembly 12 through the power control circuit 14, and the power control circuit 14 may be further electrically connected to the control unit 131. The voltage comparator 15 compares the temperature voltage value with the fixed voltage value. When the temperature voltage value is lower than the fixed voltage value, the voltage comparator 15 controls the power switch circuit 16 to shut down the power control circuit 14 to stop supplying power to the heating element 121; conversely, the voltage comparator 15 controls the power switch circuit 16 to continue supplying power to the heating element 121. It is particularly noted that the temperature-sensing element 122 outputs different voltages at different temperatures, and the relationship between voltage and temperature is inverse; that is, the higher the temperature, the lower the voltage, and the lower the temperature, the higher the voltage. Accordingly, the present invention may select the voltage comparator 15 to further confirm the temperature state of the measuring probe 11 during heating, such that when the temperature voltage value is lower than the fixed voltage value, i.e., when the temperature of the measuring probe 11 is too high, the power switch circuit 16 shuts down the power control circuit 14 to stop supplying power to the heating element 121 and immediately stops operation of the heating element 121, achieving a protective effect. In this embodiment, when the fixed voltage value supplied by the system power source is 1.2 V and the temperature voltage value is 1.14 V, which is lower than 1.2 V, the power switch circuit 16 shuts down the power control circuit 14 to stop supplying power to the heating element 121. **In** practical implementation, based on the technical foundation of this embodiment, the infrared ear temperature measuring device 1 may further be combined with the aforementioned feedback comparison mechanism between the driving PWM signals and the heating PWM signals to provide a more comprehensive protection mechanism.

It is particularly noted that, based on the protection mechanisms whereby the control unit 131 stops driving the heating element 121 when any monitored temperature measurement value is greater than A and when the duty cycle of any heating PWM signal is greater than the maximum preset value or less than the minimum preset value, the various heating protection mechanisms set forth above may be selectively implemented singly as needed, or two or more mechanisms may be operated in parallel. Appropriate settings and adjustments can be made according to actual application requirements to provide high flexibility.

In summary, the infrared ear temperature measuring device employs a heating technique using multi-segment heating PWM signals to provide stable heating and, by dynamically adjusting the duty-cycle state of the heating PWM signals, enables more stable heating to avoid overheating of the measuring probe or excessive temperature fluctuations. In addition, the invention includes built-in heating detection and warning protection mechanisms that activate safety measures immediately when an abnormal state is detected, preventing the measuring probe temperature from exceeding a safe range or from failing to reach a suitable temperature after a prolonged wait, thereby improving safety and user experience and ensuring accurate and stable measurements. Further, the invention proposes additional technical features to improve measurement accuracy and provide a better user experience. For example, after startup, if the measuring probe temperature is too low or too high, a warning can be immediately issued to the user to avoid measuring body temperature while the infrared ear temperature measuring device is in an unsuitable state, thereby preventing erroneous readings. Preferred examples of the set temperature values are also provided to ensure good operating results. In addition, to enhance the protection strength of the infrared ear temperature measuring device, one or more safety protection mechanisms may be further combined-such as a driven-time limit mechanism that automatically stops after the heating element has been driven for longer than the preset time to prevent abnormal temperature rise; upper limit settings for the driving time of each heating PWM signal so that, when the heating element operates longer than the corresponding driving time limit, driving is stopped or switched to another heating PWM signal to ensure heating stability; using PWM signal states as monitoring criteria, where the power control circuit performs corresponding control based on comparison results by the feedback comparison unit as to frequency or duty-cycle differences between the driving PWM signals and the heating PWM signals, and further, setting an absolute frequency-difference or duty-cycle-difference range, e.g., 3-5%, and stopping driving of the heating element when the range is exceeded to ensure safe operation; and a voltage-based temperature monitoring mechanism where the voltage comparator compares the temperature voltage value input by the temperature-sensing element with the fixed voltage value and, when the temperature voltage value is lower than the fixed voltage value, controls the power switch circuit to stop supplying power to the heating element, thereby further ensuring device safety and stability. In terms of hardware structure, to allow the user to quickly grasp the heating and temperature state of the infrared ear temperature measuring device, the measuring probe is provided with the heating indicator light and the junction of the handle body and the measuring probe is provided with the ring-shaped indicator light. The ring-shaped indicator light can present illumination states with color variation or brightness gradation to provide intuitive and real-time visual reminders, enabling the user to more conveniently understand operating conditions and thereby enhancing the overall user experience.

Although the present disclosure has been described with reference to specific embodiments and implementations, those skilled in the art may propose various changes and modifications. It is intended that the present disclosure encompass such changes and modifications that fall within the scope of the appended claims.

## Claims

1. An infrared ear temperature measuring device (1), comprising:
a handle body (10);
a measuring probe (11) connected to one end of the handle body (10);
an infrared sensing assembly (12) disposed within the measuring probe (11), the infrared sensing assembly (12) comprising a heating element (121), a temperature-sensing element (122), and a thermopile element (123);
wherein the temperature-sensing element (122) is configured to detect a temperature of the measuring probe (11) and to obtain an initial temperature measurement value and a plurality of monitored temperature measurement values;
wherein the heating element (121) is configured to heat the measuring probe (11); and
wherein the thermopile element (123) is configured to detect a human body temperature after the measuring probe (11) is placed into an ear canal; and
a processor (13) disposed in the handle body (10) or the measuring probe (11), the processor (13) comprising a control unit (131);
wherein, when the initial temperature measurement value is less than or equal to X, the control unit (131) drives the heating element (121), and during a heating process, the control unit (131) drives the heating element (121) using at least two heating pulse-width modulation (PWM) signals having different duty cycles, and dynamically controls an operating state of the heating element (121) based on the monitored temperature measurement values; and
wherein, when any one of the monitored temperature measurement values is greater than A, the control unit (131) stops driving the heating element (121), and wherein X is less than A.

2. The infrared ear temperature measuring device (1) of claim 1, further comprising an indicator unit (112) electrically connected to the control unit (131),
wherein, when the initial temperature measurement value is less than B, the indicator unit (112) outputs a low-temperature warning, or
when the initial temperature measurement value is greater than A, the indicator unit (112) outputs a high-temperature warning,
wherein X is less than A and greater than B.

3. The infrared ear temperature measuring device (1) of claim 2, wherein when any one of the monitored temperature measurement values is greater than A, the indicator unit (112) outputs a heating abnormality warning.

4. The infrared ear temperature measuring device (1) of claim 1, wherein when a duty cycle of any of the heating PWM signals is greater than a maximum preset value or less than a minimum preset value, the control unit (131) stops driving the heating element.

5. The infrared ear temperature measuring device (1) of claim 2, wherein A is 40°C, B is 10°C, and X is 35 °C, 36 °C, 37 °C, or 38 °C.

6. The infrared ear temperature measuring device (1) of claim 1, wherein after the control unit (131) drives the heating element (121) for longer than a preset time period, the control unit (131) stops driving the heating element (121).

7. The infrared ear temperature measuring device (1) of claim 6, wherein the preset time period is from 15 seconds to 25 seconds.

8. The infrared ear temperature measuring device (1) of claim 1, wherein the control unit (131) sets an upper driving time limit for each of the heating PWM signals, and when the heating element (121) is driven according to any one of the heating PWM signals for longer than the corresponding upper driving time limit, the control unit (131) stops driving the heating element (121).

9. The infrared ear temperature measuring device (1) of claim 8, wherein when the heating element (121) is driven according to any one of the heating PWM signals for longer than the corresponding upper driving time limit, the control unit (131) switches to driving the heating element (121) using another one of the heating PWM signals.

10. The infrared ear temperature measuring device (1) of claim 1, wherein the control unit (131) is electrically connected to the infrared sensing assembly (12) through a power control circuit (14), the control unit (131) inputting the heating PWM signals to the power control circuit (14), the power control circuit (14) outputting a plurality of driving PWM signals in response to the heating PWM signals to drive the heating element (121);
wherein the processor (13) further comprises a feedback comparison unit (133) electrically connected to the control unit (131) and the power control circuit (14), the feedback comparison unit (133) being configured to compare the driving PWM signals with the heating PWM signals, and when a difference in frequency or duty cycle exists between the driving PWM signals and the heating PWM signals, the control unit (131) stops driving the heating element (121).

11. The infrared ear temperature measuring device (1) of claim 10, wherein when an absolute difference in frequency or an absolute difference in duty cycle between the driving PWM signals and the heating PWM signals is from 3% to 5%, the control unit (131) stops driving the heating element (121).

12. The infrared ear temperature measuring device (1) of claim 1, wherein the temperature-sensing element (122) is electrically connected to a voltage comparator (15) disposed in the handle body (10) or the measuring probe (11), so as to input a temperature voltage value to the voltage comparator (15), the voltage comparator (15) further receiving a fixed voltage value, the voltage comparator (15) being electrically connected to a power switch circuit (16) indirectly electrically connected to the heating element (121);
wherein the voltage comparator (15) compares the temperature voltage value with the fixed voltage value, and when the temperature voltage value is lower than the fixed voltage value, the voltage comparator (15) controls the power switch circuit (16) to stop supplying power to the heating element (121).

13. The infrared ear temperature measuring device (1) of claim 10, wherein the measuring probe (11) comprises a heating indicator light (111), and the processor (13) comprises a lighting driving unit (132) electrically connected to the heating indicator light (111) and the control unit (131), the lighting driving unit (132) being configured to output a plurality of light modulation signals corresponding to the driving PWM signals to the heating indicator light (111), such that the heating indicator light (111) illuminates all or part of the measuring probe (11).

14. The infrared ear temperature measuring device (1) of claim 1, wherein the processor (13) comprises a lighting driving unit (132), the handle body (10) comprises a ring-shaped indicator light (101) disposed at a junction between the handle body (10) and the measuring probe (11), the lighting driving unit (132) being electrically connected to the ring-shaped indicator light (101) and the control unit (131), the ring-shaped indicator light (101) being configured to generate corresponding illumination states based on the initial temperature measurement value and the monitored temperature measurement values.

15. The infrared ear temperature measuring device (1) of claim 14, wherein the ring-shaped indicator light (101) comprises a single-color LED or a three-color LED, and generates illumination states with color variation or brightness gradation based on the initial temperature measurement value and the monitored temperature measurement values.
